# EUROPEAN PATENT SPECIFICATION

(11) **EP 1 355 088 B1**
(45) Date of publication and mention of the grant of the patent: **10.12.2008**
(21) Application number: 03000679.5
(22) Date of filing: 16.01.2003
(51) Int. Cl.: F16H 59/02, F16H 59/04

(54) **Column-type shift lever structure for automatic transmission with manual shifting mode**
An der Lenksäule angebrachte Bedienungseinrichtung für Automatikgetriebe mit Manualschaltmodus
Structure de levier de changements de vitesses monté sur la colonne de direction avec mode de passage manuel pour transmission automatique

(30) Priority: 20.04.2002 KR 2002021724; 20.04.2002 KR 2002021725
(43) Date of publication of application: 22.10.2003
(73) Proprietor: KIA MOTORS CORPORATION, Seocho-gu, Seoul (KR)
(72) Inventor: Kim, Yoong-kwang, Shihung-shi, Kyunggi-do (KR)
(74) Representative: Viering, Jentschura & Partner

(56) References cited:
- EP-A- 0 725 237
- US-A- 5 280 732
- US-A- 5 865 705

## Description

### BACKGROUND OF THE INVENTION

### Field of the Invention

The present invention relates to a column-type shift lever for an automatic transmission with a manual shifting mode comprising: an upper plate being rotated around a steering shaft by a shift lever; a lower plate being provided in a lower portion of the upper plate and having locking jaws which perform catching and releasing actions at each shifting position of a stopper formed on the shift lever when the shift lever is pivoted upward and downward; and a cable actuating lever being provided on the lower plate and being pivoted by a ball joint formed on the upper plate to actuate a transmission control cable.

The present invention provides a column-type shift lever structure for an automatic transmission with a manual shifting mode, and more particularly a column-type shift lever structure applied to an automatic transmission vehicle, which is improved into a structure permitting a manual shifting mode, thus allowing a driver to enjoy dynamic driving feel by virtue of the manual shifting mode even in an automatic transmission vehicle with a column-type shift lever mounted thereto.

### Description of the Prior Art

A shift lever for handling a vehicle transmission is largely divided into a floor mounting-type shift lever installed on a floor side of a vehicle driver's seat and a column-type shift lever installed on a steering column adjacent to a vehicle steering wheel.

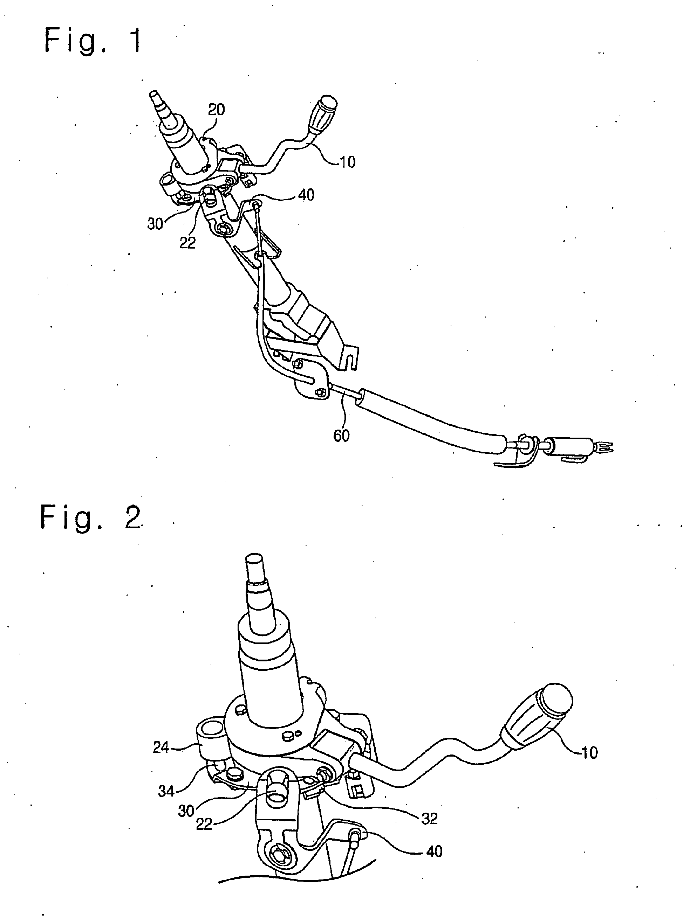

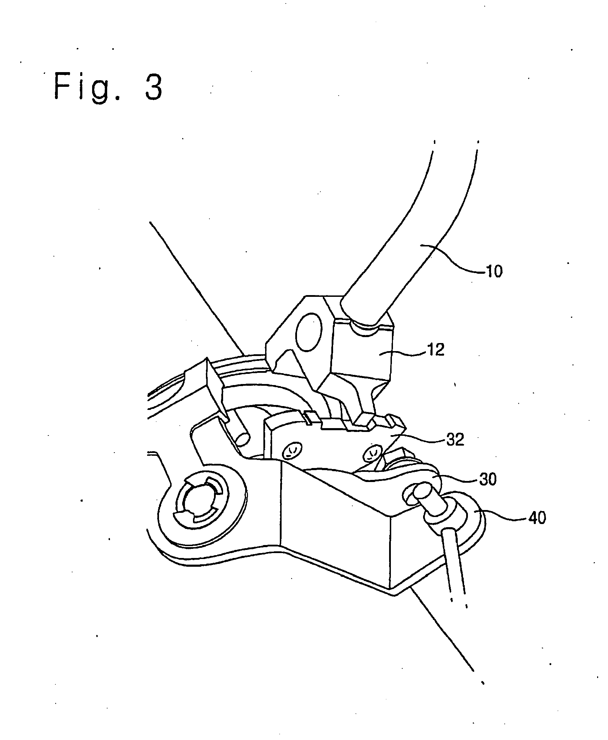

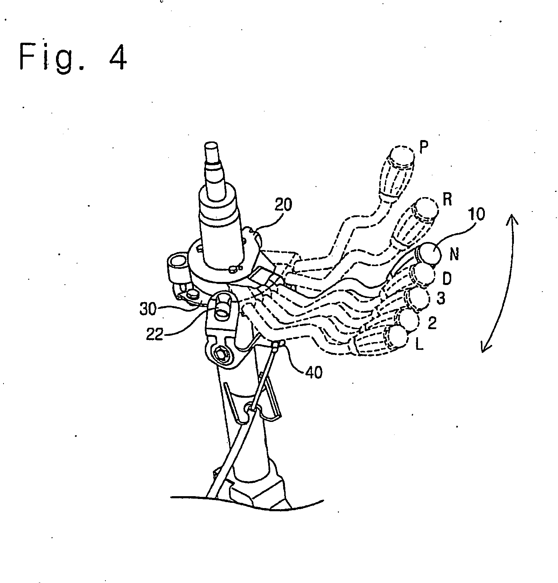

Fig. 1 is a constructional perspective view showing one example of a conventional column-type shift lever structure, Fig. 2 is a constructional perspective view showing one example of a detent structure of a conventional column-type shift lever, Fig. 3 is a constructional perspective view showing one example of a guide plate structure of a conventional column-type shift lever, and Fig. 4 is a constructional perspective view showing one example of operational conditions of a conventional column-type shift lever. Hereinafter, one example of the conventional column-type shift lever structure for an automatic transmission will be described with reference to these drawings.

Looking at the illustrated column-type shift lever structure, the column-type shift lever structure includes a shift lever 10, an upper plate 20, a lower plate 30, a cable actuating lever 40 and a transmission control cable 60.

The shift lever 10 enables a driver to perform shifting operations and is rotationally fixed to the upper plate 20. The upper plate 20 is formed with a ball joint 22 for rotating a cable actuating lever 40.

The lower plate 30, which is disposed on a lower face side of the upper plate 20, controls operation of each shift stage and is provided with a detent part for giving detent feel. The cable actuating lever 40 is installed on the lower plate 30 to actuate the transmission control cable 60 by means of the rotation of the ball joint 22. The transmission control cable 60 rotates a manual shaft on a transmission side as the shift lever 10 is operated.

In shifting operations of the conventional column-type shift lever thus constructed, for example, a shifting process from position P to position R is as follows:

As shown in Fig. 4, the shift stages of the shift lever 10 are so constructed that they progress in clockwise order of P R N D 3 2 L. If a driver rotates the shift lever 10 by a predetermined angle starting from position P (an angle toward position R), the ball joint 22 of the upper plate 20 is rotated around a center axis of the steering wheel.

At this time, the cable actuating lever 40 connected to the ball joint 22 is rotated to pull the transmission control cable 60 and thus to rotate the manual shaft on the transmission side opposite to the cable side, by which the shifting operation is effected. The shifting operation in other ranges is achieved in the same manner.

Now, a description will be given for detail construction of each part of the column-type shift lever structure.

Referring to Fig. 2, column-type shift lever structure includes the detent part for giving detent feel. In order to give the detent feel upon rotation of the shift lever 10, a detent spring portion 24 of the upper plate 20 is provided with a ball resiliently supported by a spring, and detent holes 34 in which the ball is engaged are formed on the lower plate 30 in a position corresponding to the detent spring portion 24 and with a distance between the respective shifting positions.

As shown in Fig. 3, a stopper 12 formed in a body portion of the shift lever 10 is constructed in such a manner that it is caught by locking jaws of a guide plate 32 when the shift lever 10 is rotated for the shifting, as a result of which the shift lever 10 must be pivoted upward before it is rotated at a preset shift stage.

That is, in a case of the guide plate 32 as illustrated, the shift lever 10 cannot be rotated from position P to position R until it is pivoted upward. This is also applicable to a case when the shift lever 10 is rotated from position 3 to position 2, from position 2 to position N or from position N to position R.

Meanwhile, vehicle transmissions are largely divided into manual transmission type and automatic transmission type. The manual transmission and the automatic transmission have their own advantages and disadvantages, respectively, on the basis of which they have been selectively installed and used according to driver's taste. Since it is difficult to handle the manual transmission compared with the automatic transmission and thus the manual transmission is inconvenient to a driver, a recent tendency is toward preferring a vehicle equipped with an automatic transmission.

On the other hand, however, the manual transmission has an advantage in that a driver can perform gear shifting in accordance with vehicle's traveling conditions, so that the manual transmission has superior gas mileage over that of the automatic transmission and allows a driver to enjoy dynamic driving feel. For the sake of drivers preferring the convenience of the automatic transmission and the dynamic driving characteristic of the manual transmission, therefore, an automatic transmission with a manual shifting mode similar to the manual transmission's gear shifting has been recently come to be developed and used.

Many automatic transmission structures with the manual shifting mode have been proposed for a vehicle with the floor mounting-type shift lever, but such an automatic transmission has scarcely been proposed for a vehicle with the column-type shift lever because it is structurally difficult to apply the manual shifting mode to the vehicle with the column-type shift lever, and some proposals even have a problem regarding unfavorable handling properties due to structural complexity or poor durability.

Consequently, there is an earnest need for developing a column-type shift lever structure capable of applying the manual shifting mode thereto.

A column-type shift lever of a generic type is known from US 5,280,732 A. This document discloses a column-type shift lever structure for an automatic transmission comprising the features of the preamble part of the present claims 1. But this known automatic transmission does not comprise a manual shifting mode.

From document US 5,865,705 A an operating apparatus for an automatic transmission is known which comprises a shift lever which is shifted to each a plurality of automatic shift ranges in an automatic shift mode and which comprises a manual shift mode switch for switching the automatic shift mode to a manual shift mode of the automatic transmission.

### SUMMARY OF THE INVENTION

Accordingly, the present invention has been created in order to solve the above-mentioned problems occurring in the prior art, and an object of the present invention is to provide a column-type shift lever structure applied to an automatic transmission vehicle, which is improved into a structure permitting a manual shifting mode, thus allowing a driver to enjoy dynamic driving feel by virtue of the manual shifting mode even in an automatic transmission vehicle with a column-type shift lever mounted thereto.

To accomplish this object, there is provided a column-type shift lever structure for an automatic transmission comprising: an upper plate being rotated around a steering shaft by a shift lever; a lower plate being provided in a lower portion of the upper plate and having locking jaws which perform catching and releasing actions at each shifting position of a stopper formed on the shift lever when the shift lever is pivoted upward and downward; and a cable actuating lever being provided on the lower plate and being pivoted by a ball joint formed on the upper plate to actuate a transmission control cable, wherein the automatic transmission comprises a manual shifting mode and that the shift lever can be rotated on a predetermined manual shifting mode set up by the lower plate, a select switch is provided for transmitting a signal causing the transmission to be converted from a driving mode to a manual shifting mode or vice versa to a Transmission Control Unit, and a mode switch part or a switch part is provided in the manual shifting mode position of the shift lever to sense the upward and downward pivoting operations of the shift lever as upward and downward shifting signals, respectively, and to transmit the signals to the Transmission Control Unit.
Preferable the locking jaws are so constructed that the shift lever is rotated from a driving mode position to a manual shifting mode position.

In accordance with another aspect of the present invention, there is provided a shift lever structure for the automatic transmission wherein the select switch is provided on the shift lever to transmit a signal for converting the transmission from a driving mode to a manual shifting mode or vice versa to the Transmission Control Unit when a driver operates the select switch, and wherein the switch part transmits the signals to the Transmission Control Unit in a state when the transmission is converted from the driving mode to the manual shifting mode.

Preferably, the mode switch part comprises the select switch for sensing the rotation of the shift lever from the driving mode position to the manual shifting mode position, and upper and lower switches for sensing upward and downward pivoting operations of the shift lever as the upward and downward shifting signals, respectively.

The select switch preferably transmits its sensing signal to the Transmission Control Unit to convert the transmission from the driving mode to the manual shifting mode when it senses the rotation of the shift lever from the driving mode position to the manual shifting mode position.

Also, the locking jaws are preferably constructed in such a manner that the shift lever can be rotated only in a state of being pivoted upward when the shift lever is rotated form the driving mode position to the manual shifting mode position, thus preventing direct conversion from the driving mode to the manual shifting mode.

Preferably, the select switch transmits a signal for converting the transmission from the driving mode to the manual shifting mode to the Transmission Control Unit when it is "ON" and transmits a signal for inversely converting the transmission to the Transmission Control Unit when it is "OFF".

More preferably, the select switch is provided on a knob of the shift lever and is so constructed that a switch wire is drawn out through an inner hollow portion of the shift lever.

The switch part preferably includes upper and lower switches for sensing upward and downward pivoting operations of the shift lever as upward and downward shifting signals, respectively.

It is preferred that the shift lever structure further comprises a cluster for indicating the current shifting range and the cluster is provided with indication lamps for indicating the driving mode and the manual shifting mode, respectively to show the current mode when the mode is converted by the select switch.

Finally, it is preferred that the locking jaws are formed on a guide plate separately attached to the lower plate.

### BRIEF DESCRIPTION OF THE DRAWINGS

Hereinafter, preferred embodiments of the present invention will be described in detail with reference to the accompanying drawings.
Fig. 1 is a constructional perspective view showing one example of a conventional column-type shift lever structure;
Fig. 2 is a constructional perspective view showing one example of a detent structure of the conventional column-type shift lever;
Fig. 3 is a constructional perspective view showing one example of a guide plate structure of the conventional column-type shift lever;
Fig. 4 is a constructional perspective view showing one example of operational conditions of the conventional column-type shift lever;
Fig. 5 is a constructional perspective view of a column-type shift lever structure in accordance with one preferred embodiment of the present invention;
Fig. 6 is a constructional perspective view showing a main part of the column-type shift lever structure in accordance with the embodiment of the present invention;
Fig. 7 is a constructional perspective view showing a mode switch part of the column-type shift lever structure in accordance with the embodiment of the present invention;
Figs. 8a and 8b are constructional views on an enlarged scale showing an upper switch and a select switch of the column-type shift lever structure in accordance with the preferred embodiment of the present invention, respectively;
Figs. 9a and 9b are a constructional view for explaining a guide plate structure of the column-type shift lever structure in accordance with the embodiment of the present invention and a plan view of a guide plate of the guide plate structure;
Fig. 10 is a constructional perspective view showing circuitry layout of the column-type shift lever structure in accordance with the embodiment of the present invention;
Fig. 11 is a constructional perspective view showing a column-type shift lever structure in accordance with another embodiment of the present invention;
Fig. 12 is a constructional perspective view showing a main part of the column-type shift lever structure in accordance with the embodiment of the present invention;
Fig. 13 is a constructional perspective view showing a switch part of the column-type shift lever structure in accordance with the embodiment of the present invention;
Figs. 14a and 14b are constructional perspective views in an enlarged scale showing an upper switch and a select switch of the column-type shift lever structure in accordance with the embodiment of the present invention;
Fig. 15 is a plan view of a guide plate of the column-type shift lever structure in accordance with the present invention; and
Fig. 16 is a constructional perspective view showing circuitry layout of the column-type shift lever structure in accordance with the present invention.

### DETAILED DESCRIPTION OF THE PREFERRED EMBODIMENTS

Hereinafter, preferred embodiments of the present invention will be described in detail with reference to the accompanying drawings.

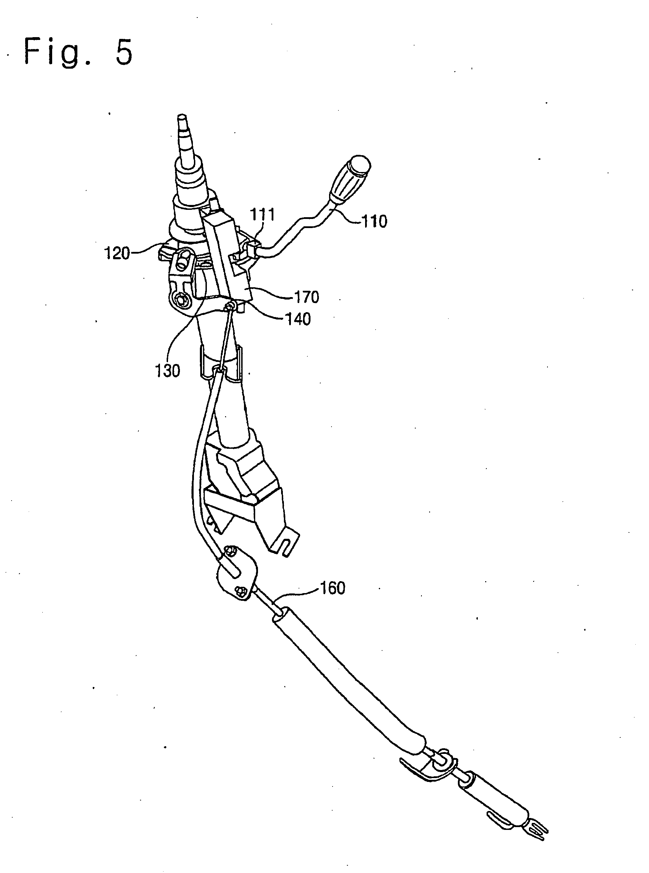

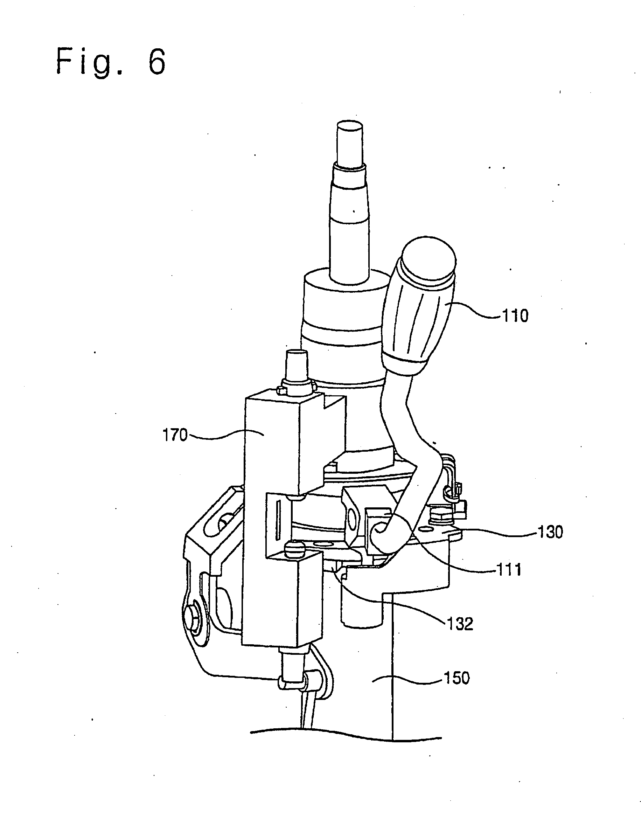

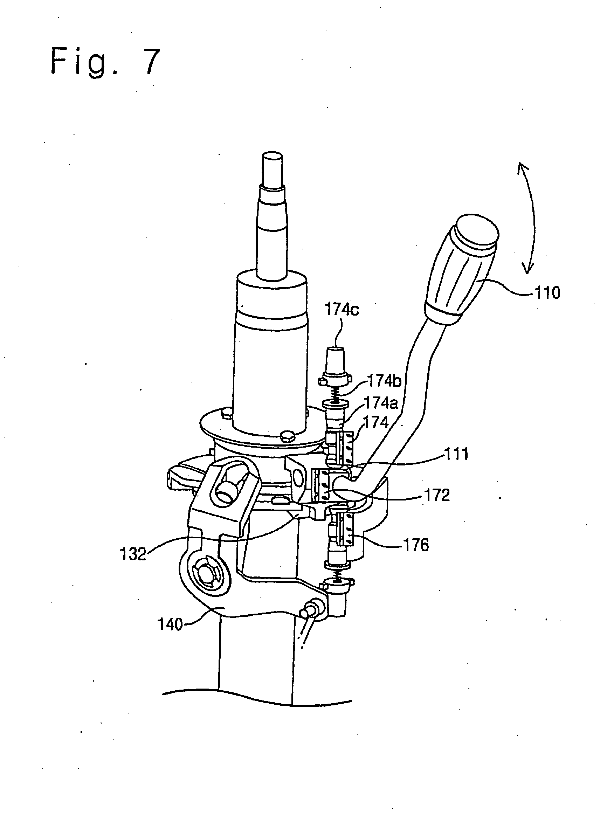

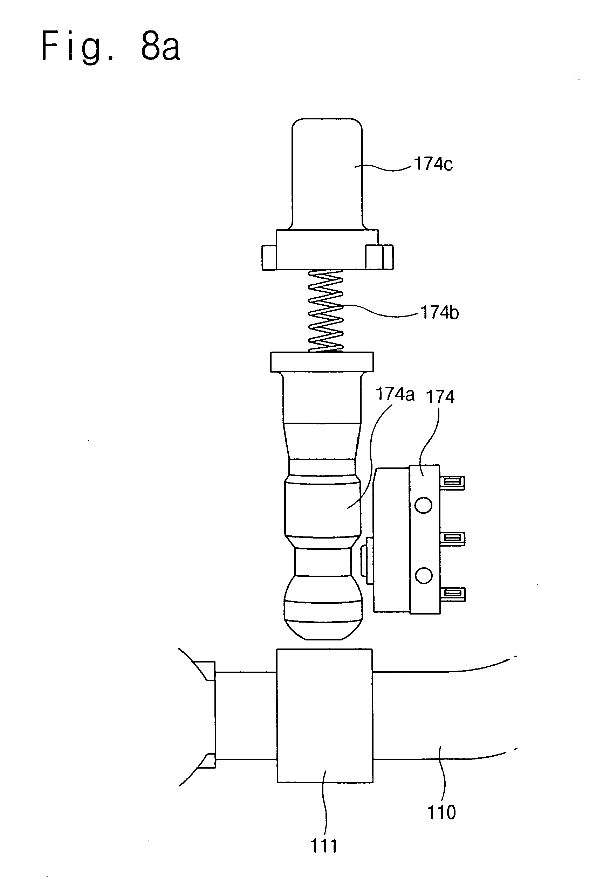

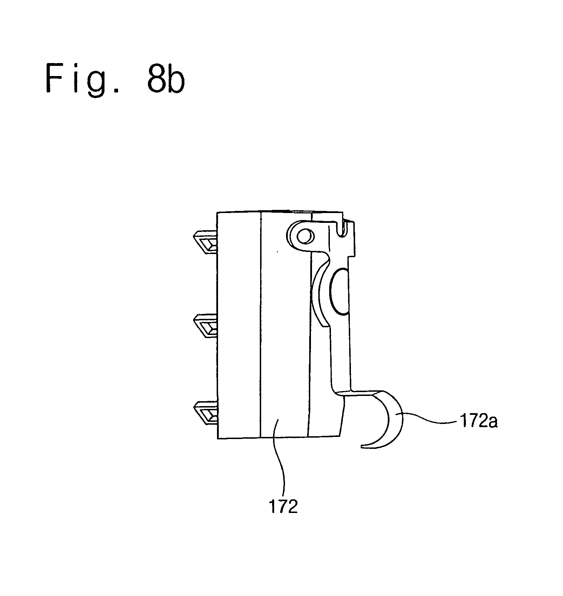

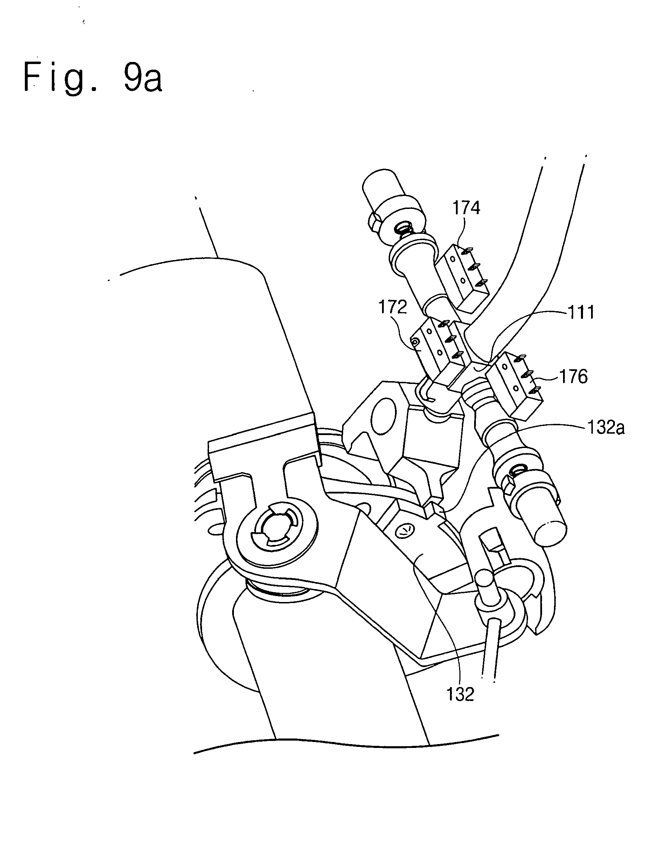

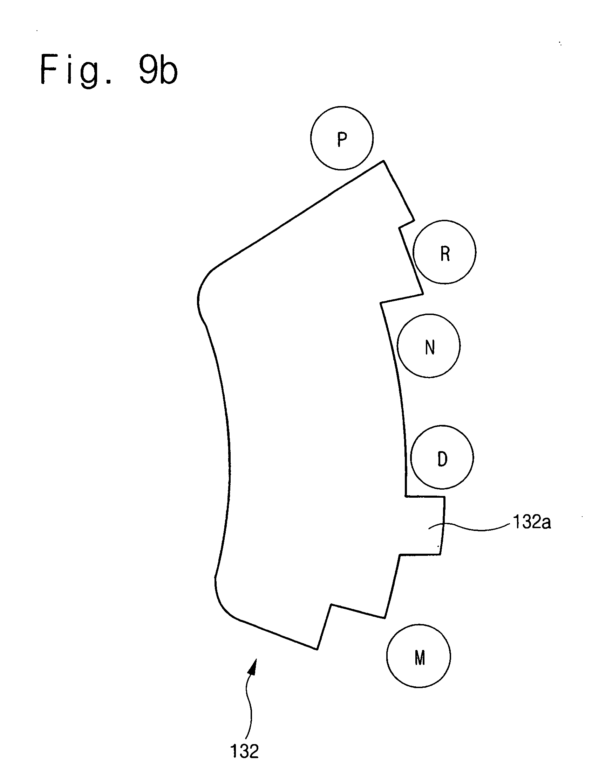

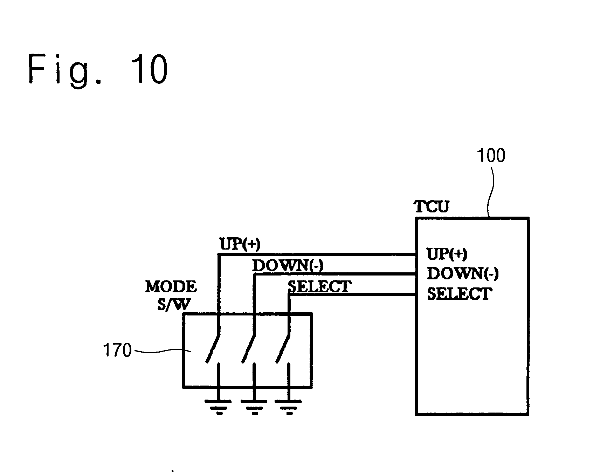

Fig. 5 is a constructional perspective view of a column-type shift lever structure in accordance with one preferred embodiment of the present invention, Fig. 6 is a constructional perspective view showing a main part of the column-type shift lever structure in accordance with the embodiment of the present invention, Fig. 7 is a constructional perspective view showing a mode switch part of the column-type shift lever structure in accordance with the embodiment of the present invention, Figs. 8a and 8b are constructional views on an enlarged scale showing an upper switch and a select switch of the column-type shift lever structure in accordance with the preferred embodiment of the present invention, respectively, Figs. 9a and 9b are a constructional view for explaining a guide plate structure of the column-type shift lever structure in accordance with the embodiment of the present invention and a plan view of a guide plate of the guide plate structure, and Fig. 10 is a constructional perspective view showing circuitry layout of the column-type shift lever structure in accordance with the embodiment of the present invention.

A basic structure of the column-type shift lever structure in accordance with this embodiment of the present invention is the same as that of the conventional column-type shift lever structure as described above, but the mode switch part 170 for sensing upward and downward pivoting of the shift lever 110 in a manual shifting mode is further provided in the present invention and the guide plate is formed with locking jaws suitable to the structure in accordance with the present invention. In the following description and drawings, repetition of the description on the same or similar components will be omitted.

The column-type shift lever structure in accordance with this embodiment generally comprises a shift lever 110, an upper plate 120, a lower plate 130, a mode switch part 170, a cable actuating lever 140, a transmission control cable 160 and the like.

Such a shift lever structure is applied to an automatic transmission having shifting ranges of P-R-N-D. The mode switch part 170 is operated in such a manner that it senses upward and downward pivoting of the shift lever 110 and transmits its sensing signals to a Transmission Control Unit 100 when the shift lever 110 passes to a manual shifting mode position set up in a position next to range D, thereby enabling a driver to control the current shift stage of the automatic transmission by means of his shift lever operation.

That is, if the driver raises the shift lever 110 upward and then lets it go or if the driver lowers the shift lever 110 downward and then lets it go, the mode switch part 170 senses this driver's operation as an upshift or a downshift, respectively and transmits its sensing signal to the Transmission Control Unit 100. In this way, the gear shifting is effected.

The mode switch part 170 comprises an upper switch 174, a lower switch 176 and a select switch 172 for sensing upward pivoting of the shift lever, downward pivoting of the shift lever and passage of the shift lever from position D to the manual shifting mode position, respectively. The mode switch part 170 is fixedly provided in a proper position on a steering shaft side.

The upper and lower switches 174, 176 and the select switch 172 are fixed to upper and lower portions and a side portion within the mode switch part 170, respectively. If the shift lever 110 passes to the manual shifting mode position, an actuating member 172a (elastic member) of the select switch 172 is pressed by a switch sensing member 111 formed on the shift lever 110 to turn on the select switch 172.

If the shift lever 110 is so operated as to be pivoted upward, an actuating rod 174a of the upper switch 174 is moved upward by the switch sensing member 111 while an end portion of the actuating rod 174a, whose diameter is larger than those of the other portions, presses the upper switch 174, so that the upper switch 174 is turned on.

The actuating rod 174a is resiliently supported by a return spring 174b, which is fixed by a fixing member 174c, so as to be returned to its original position after it is moved upward. The lower switch 176 also has the same construction as that of the upper switch 174.

In order to transmit the shifting mode conversion signal and the shift stage control signal, the upper and lower switches 174, 176 and the select switch 172 of the mode switch part 170 are connected to their relevant signal parts of the Transmission Control Unit 100, respectively.

The guide plate 132 attached to the lower plate 130 is formed with locking jaws for differentiating the respective shift stages from each other in a similar manner to in the conventional column-type shift lever structure. In particular, a locking jaw 132a for preventing direct passage of the shift lever 110 from range D to the manual shifting mode and thus false operation's occurrence is formed in a position next to range D. Since the shift lever 110 is caught by the locking jaw 132a, the shift lever 110 will not rotated from range D to the manual shifting mode only by the lever rotation, but can be rotated only after it is pushed upward.

The shift lever structure in accordance with this embodiment is operated as follows:

If the shift lever 110 passes from range D to the manual shifting mode as shown, the select switch 172 of the mode switch part 170 is actuated to be turned on and thus the TCU 100 perceives the conversion from the driving mode to the manual shifting mode to fix a shift stage to the current shift stage. That is, the Transmission Control Unit 100 does not perform automatic shifting control according to vehicle speed and throttle position, but causes the gear shifting to be effected only by signals from the mode switch part 170.

Thereafter, if the mode switch part 170 senses upward or downward movement of the switch sensing member 111 and transmits its sensing signal to the Transmission Control Unit 100, the gear shifting is effected by the transmitted signal.

In the course when the shift lever 110 passes from range D to the manual shifting mode, direct conversion from range D to the manual shifting mode is prevented by the locking jaw 32a formed on the guide plate 132 in a position next to range D.

Since there are no lower locking jaws as those provided in positions of the automatic shifting ranges after the shift lever 100 passes to the manual shifting mode, the shift lever 110 can be freely pivoted to actuate the mode switch part 170.

If the shift lever 110 is rotated toward range D in order to pass from the manual shifting mode to the driving mode (range D), the select switch 172 is "OFF" and the Transmission Control Unit 100 perceives this to convert the transmission from the manual shifting mode to the driving mode again and to automatically control the gear shifting according to vehicle speed and throttle position.

Next, a column-type shift lever structure in accordance with another embodiment of the present invention will be described.

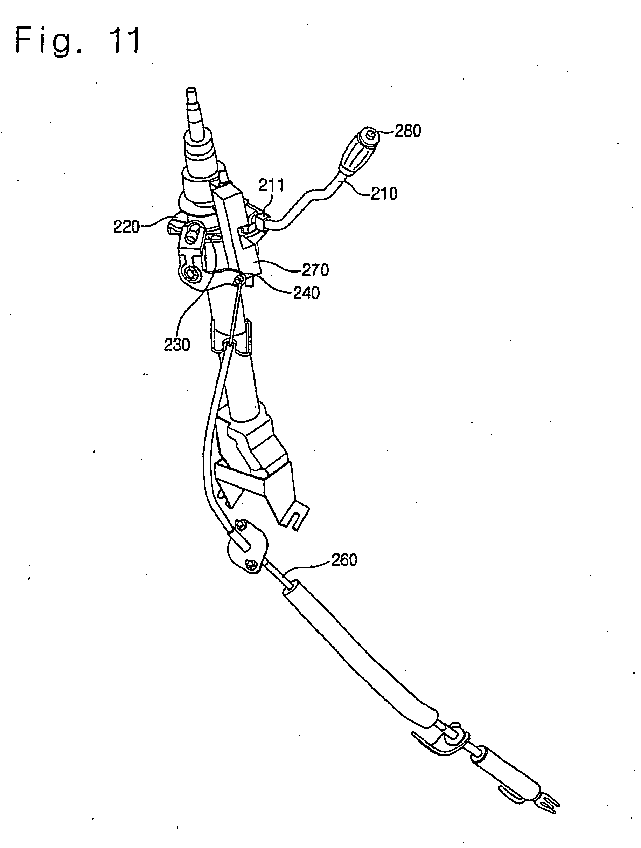

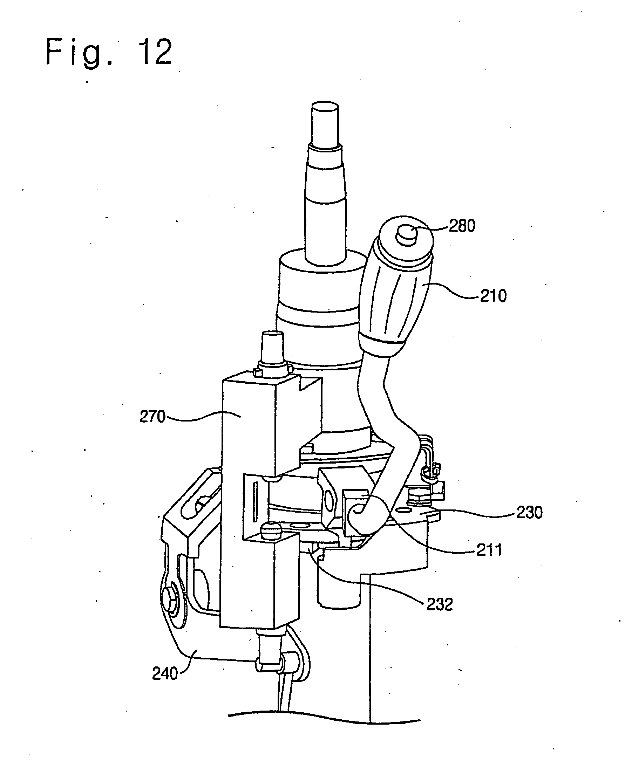

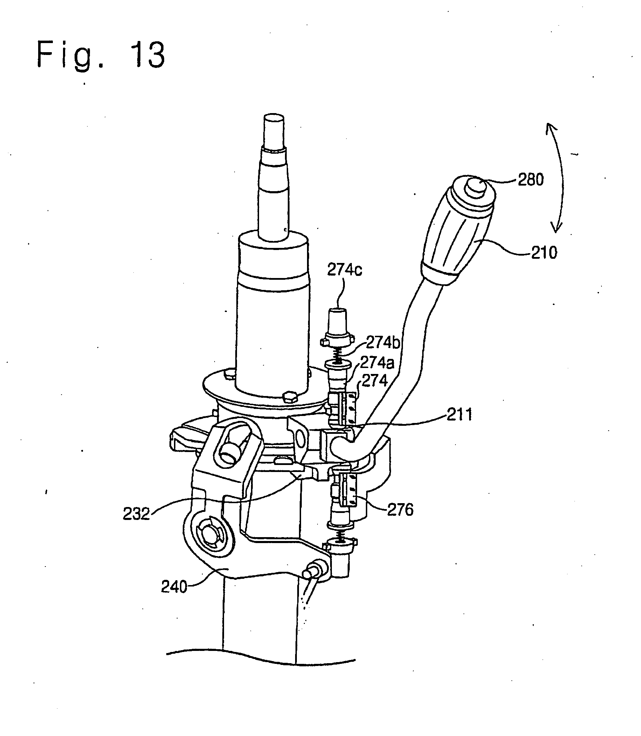

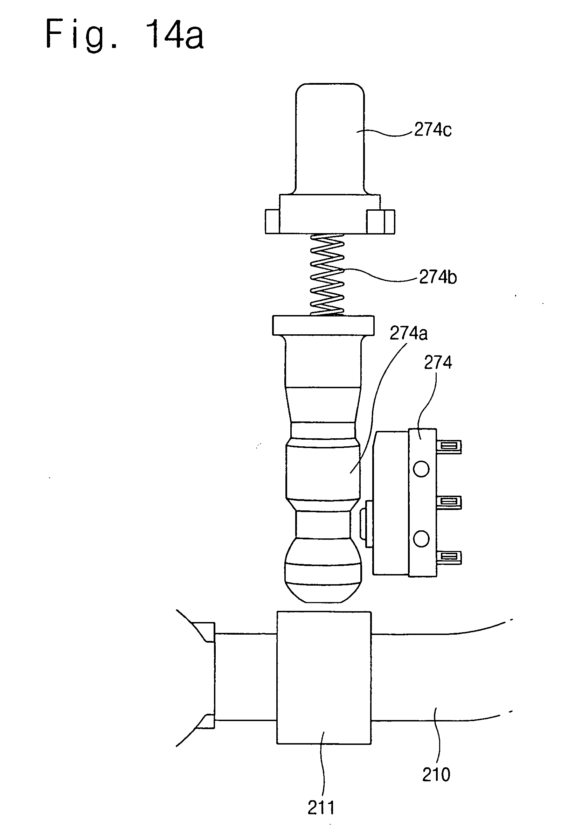

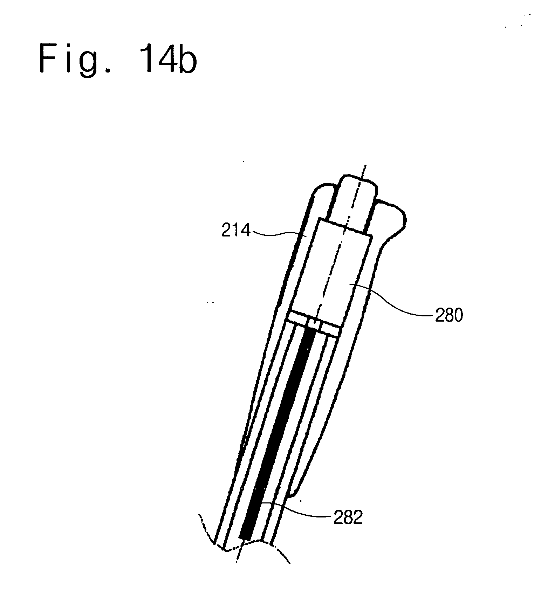

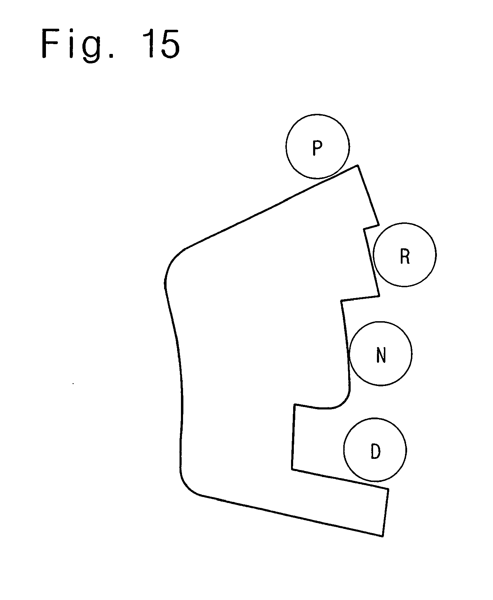

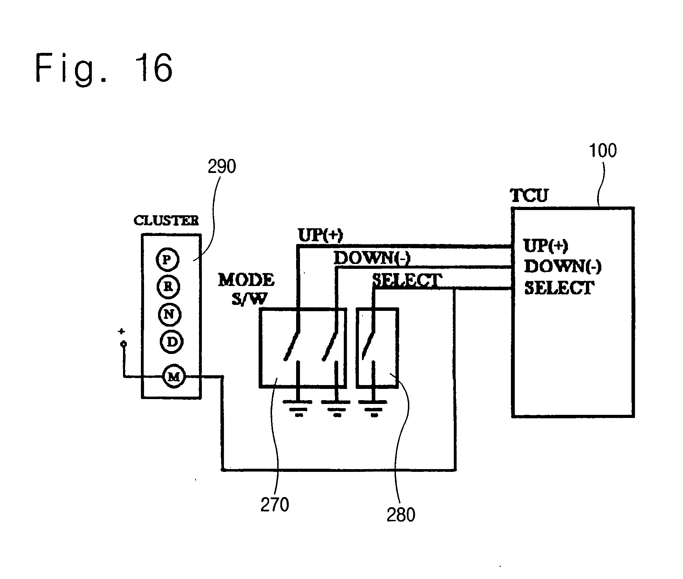

Fig. 11 is a constructional perspective view showing a column-type shift lever structure in accordance with another embodiment of the present invention, Fig. 12 is a constructional perspective view showing a main part of the column-type shift lever structure in accordance with the embodiment of the present invention, Fig. 13 is a constructional perspective view showing a switch part of the column-type shift lever structure in accordance with the embodiment of the present invention, Figs. 14a and 14b are constructional perspective views in an enlarged scale showing an upper switch and a select switch of the column-type shift lever structure in accordance with the embodiment of the present invention, Fig. 15 is a plan view of a guide plate of the column-type shift lever structure in accordance with the present invention, and Fig. 16 is a constructional perspective view showing circuitry layout of the column-type shift lever structure in accordance with the present invention.

In the column-type shift lever structure in accordance with this embodiment of the present invention, a shift lever 210 is provided with a select switch 280 for transmitting a signal causing the transmission to be converted from a driving mode D to a manual shifting mode M or vice versa to a Transmission Control Unit 100, and a switch part 270 is provided for sensing the upward and downward pivoting operations of the shift lever as upward and downward shifting signals, respectively in a state when the transmission is converted from the driving mode D to the manual shifting mode M.

The column-type shift lever structure in accordance with this embodiment generally comprises a shift lever 210, a select switch 280, an upper plate 220, a lower plate 230, a switch part 270, a cable actuating lever 240, a transmission control cable 260 and the like.

Such a shift lever structure is applied to an automatic transmission having shifting ranges of P-R-N-D. The select switch 280, which is operated in a state when the shift lever 210 is positioned in the driving mode (range D), causes the transmission to be converted from the driving mode to the manual shifting mode or vice versa.

The select switch 280 is mounted to a knob 214 of the shift lever 210, and is so constructed that a switch wire 282 is drawn out through an inner hollow portion of the shift lever 210. The select switch 280 is turned on when a driver pushes down it once and is turn off when the driver pushes down it once more and thus it is returned to its original position.

By this construction of the select switch 280, the select switch 280 transmit a signal causing the transmission to be converted from the driving mode D to the manual mode M when it is "ON", and transmits a signal causing the transmission to be inversely converted when it is "OFF".

The switch part 270 is operated in a state when the shift lever 210 passes from a position of range D to the manual shifting mode position and in such a manner that it senses upward and downward pivoting of the shift lever 210 and transmits its sensing signals to the Transmission Control Unit 100, thereby enabling a driver to control the current shift stage of the automatic transmission by means of his shift lever operation.

That is, if the driver raises the shift lever 210 upward and then lets it go or if the driver lowers the shift lever 210 downward and then lets it go, the switch part 270 senses this driver's operation as an upshift or downshift, respectively and transmits its sensing signal to the Transmission Control Unit 100. In this way, the gear shifting is effected.

The switch part 270 comprises an upper switch 274 and a lower switch 276 for sensing upward pivoting of the shift lever and downward pivoting of the shift lever, respectively. The switch part 270 is fixedly provided in a proper position on a steering shaft side.

The upper and lower switches 274, 276 are fixed to upper and lower portions within the switch part 270, respectively. If the shift lever 210 is so operated as to be pivoted upward, an actuating rod 274a of the upper switch 274 is moved upward by the switch sensing member 211 formed on the shift lever 210 while an end portion of the actuating rod 274a, whose diameter is larger than those of the other portions, presses the upper switch 274, so that the upper switch 274 is turned on.

The actuating rod 274a is resiliently supported by a return spring 274b, which is fixed by a fixing member 274c, so as to be returned to its original position after it is moved upward. The lower switch 276 also has the same construction as that of the upper switch 274.

In order to transmit the shifting mode conversion signal and the shift stage control signal, the upper and lower switches 274, 276 of the switch part 270 and the select switch 280 are connected to their relevant signal parts of the Transmission Control Unit 100, respectively.

The guide plate 232 attached to the lower plate 230 is formed with locking jaws for differentiating the respective shift stages from each other in a similar manner to in the conventional column-type shift lever structure. On the contrary to the conventional column-type shift lever structure, any other range than ranges P-R-N-D, such as ranges 3-2-L, are not necessary because the column-type shift lever structure of the present invention is provided with the manual shifting mode, by reason of which the guide plate 232 in accordance with this embodiment only has to include locking jaws for differentiating ranges P-R-N-D.

In a vehicle to which the shift lever 210 in accordance with this embodiment is mounted, a cluster 290 is provided for showing the current shifting range and the cluster 290 essentially has indication lamps for indicating the respective shifting ranges of P-R-N-D.

Besides the indication lamp for indicating the driving mode (D), the cluster 290 is provided with an indication lamp for indicating the manual shifting mode (M). Since the indication lamp for the driving mode (D) is not lighted and the indication lamp for the manual shifting mode (M) is lighted when the select switch is "ON", and vice versa when the select switch is "OFF", the driver can easily recognize the current mode.

The shift lever structure in accordance with this embodiment is operated as follows:

If the select switch 280 is turned on in a state when the shift lever 210 is positioned in range D, the Transmission Control Unit 100 perceives the conversion from the driving mode to the manual shifting mode to fix a shift stage to the current shift stage. That is, the Transmission Control Unit 100 does not perform automatic shifting control according to vehicle speed and throttle position, but causes the gear shifting to be effected only by signals from the switch part 270.

Thereafter, if the switch part 270 senses upward or downward movement of the switch sensing member 111 and transmits its sensing signal to the Transmission Control Unit 100, the gear shifting is effected by the transmitted signal.

Since there are no lower locking jaws preventing the downward pivoting of the shift lever 210 in the manual shifting mode position, the shift lever 210 can be freely pivoted to actuate the switch part 270.

In order to convert the transmission from the driving mode (range D) to the manual shifting mode (M) again, the select switch 280 is rendered "OFF" and the Transmission Control Unit 100 perceives this to convert the transmission from the manual shifting mode to the driving mode and to automatically control the gear shifting according to vehicle speed and throttle position.

As stated above, a column-type shift lever structure for an automatic transmission with a manual shifting mode in accordance with the present invention permits a diver to manually shift a gear at his convenience even in an automatic transmission vehicle employing the column-type shift, thus providing more dynamic driving feel and improving performance and convenience of the vehicle.

## Claims

1. A column-type shift lever structure for an automatic transmission with a manual shifting mode comprising:
an upper plate (20; 120; 220) being rotated around a steering shaft by a shift lever (10; 110; 210);
a lower plate (30; 130; 230) being provided in a lower portion of the upper plate (20; 120; 220) and having locking jaws (132a) which perform catching and releasing actions at each shifting position of a stopper (12) formed on the shift lever (10; 110; 210) when the shift lever (10; 110; 210) is pivoted upward and downward; and
a cable actuating lever (40; 140; 240) being provided on the lower plate (30; 130; 230) and being pivoted by a ball joint (22) formed on the upper plate (20; 120; 220) to actuate a transmission control cable (60; 160; 260)
**characterized in**
**that** the shift lever (110; 210) can be rotated on a predetermined manual shifting mode set up by the lower plate (130; 230), a select switch (172; 280) is provided for transmitting a signal causing a transmission to be converted from a driving mode to a manual shifting mode or vice versa to a Transmission Control Unit (100), and a mode switch part (170) or a switch part (270) is provided in the manual shifting mode position of the shift lever (110; 210) to sense the upward and downward pivoting operations of the shift lever (110; 210) as upward and downward shifting signals, respectively, and to transmit the signals to the Transmission Control Unit (100).

2. A column-type shift lever structure for an automatic transmission according to claim 1, wherein the locking jaws (132a) are so constructed that the shift lever (110; 210) is rotated from a driving mode position to a manual shifting mode position.

3. A column-type shift lever structure for an automatic transmission according to claim 1, wherein the select switch (280) is provided on the shift lever (210) to transmit a signal for converting a transmission from a driving mode to a manual shifting mode or vice versa to the Transmission Control Unit (100) when a driver operates the select switch (280) and wherein the switch part (270) transmits the signals to the Transmission Control Unit (100) in a state when the transmission is converted from the driving mode to the manual shifting mode.

4. A column-type shift lever structure according to claim 1 or 2, wherein the mode switch part (170) comprises the select switch (172) for sensing the rotation of the shift lever (110) from the driving mode position to the manual shifting mode position, and upper and lower switches (174, 176) for sensing the upward and downward pivoting operations of the shift lever (110) as the upward and downward shifting signals, respectively.

5. A column-type shift lever structure according to claim 4, wherein the select switch (172) transmits its sensing signal to the Transmission Control Unit (100) to convert the transmission from the driving mode to the manual shifting mode when it senses the rotation of the shift lever (110) from the driving mode position to the manual shifting mode position.

6. A column-type shift lever structure according to any one of the preceding claims, wherein the locking jaws (132a) are constructed in such a manner that the shift lever (110) can be rotated only in a state of being pivoted upward when the shift lever (110) is rotated from the driving mode position to the manual shifting mode position, thus preventing direct conversion from the driving mode to the manual shifting mode.

7. A column-type shift lever structure according to any one of claims 1-3, wherein the select switch (280) transmits a signal for converting the transmission from the driving mode to the manual shifting mode to the Transmission Control Unit (100) when it is "ON" and transmits a signal for inversely converting the transmission to the Transmission Control Unit (100) when it is "OFF".

8. A column-type shift lever structure according to any one of claims 1-3, wherein the select switch (280) is provided on a knob (214) of the shift lever (210) and is so constructed that a switch wire (282) is drawn out through an inner hollow portion of the shift lever (210).

9. A column-type shift lever structure according to any one of claims 1-3, wherein the switch part (270) includes upper and lower switches (274, 276) for sensing the upward and downward pivoting operations of the shift lever (210) as the upward and downward shifting signals, respectively.

10. A column-type shift lever structure according to any one of claims 1-3, wherein the shift lever structure further comprises a cluster (290) for indicating the current shifting range and the cluster (290) is provided with indication lamps for indicating the driving mode and the manual shifting mode, respectively to show the current mode when the mode is converted by the select switch.

11. A column-type shift lever structure according to any one of the preceding claims, wherein the locking jaws (132a) are formed on a guide plate (132; 232) separately attached to the lower plate.

## Patentansprüche

1. Lenkradschaltungsaufbau für ein Automatikgetriebe mit einem Handschaltmodus, aufweisend:
eine obere Platte (20; 120; 220), die mittels eines Schalthebels (10; 110; 210) um eine Lenkwelle gedreht wird,
eine untere Platte (30; 130; 230), die an einem unteren Abschnitt der oberen Platte (20; 120; 220) bereitgestellt ist und Rastbacken (132a) aufweist, die Einrast- und Freigabevorgänge in jeder Schaltstellung eines an dem Schalthebel (10; 110; 210) ausgebildeten Zapfens (12) ausführen, wenn der Schalthebel (10; 110; 210) nach oben und nach unten geschwenkt wird, und
einen Kabelbetätigungshebel (40; 140; 240), der an der unteren Platte (30; 130; 230) bereitgestellt ist und mittels eines an der oberen Platte (20; 120; 220) ausgebildeten Kugelgelenks (22) verschwenkt wird, um ein Getriebesteuerkabel (60; 160; 260) zu betätigen,
**dadurch gekennzeichnet,**
**dass** der Schalthebel (110; 210) in einem vorbestimmten Handschaltmodus gedreht werden kann, der durch die untere Platte (130; 230) festgelegt ist, ein Auswahlschalter (172; 280) zum Übertragen eines Signals an eine Getriebesteuereinheit (100), das bewirkt, dass ein Getriebe von einem Dauerfahrmodus in einen Handschaltmodus und umgekehrt umgestellt wird, bereitgestellt ist und ein Modusschaltteil (170) oder ein Schaltteil (270) in der Handschaltmodusstellung des Schalthebels (110; 210) bereitgestellt ist, um die nach oben und nach unten gerichtete Schwenkbetätigung des Schalthebels (110; 210) als entsprechendes Hoch- und Rückschaltsignal zu erkennen und um die Signale an die Getriebesteuereinheit (100) zu übertragen.

2. Lenkradschaltungsaufbau für ein Automatikgetriebe nach Anspruch 1, wobei die Rastbacken (132a) derart gestaltet sind, dass der Schalthebel (110; 210) aus einer Dauerfahrmodusstellung in eine Handschaltmodusstellung gedreht wird.

3. Lenkradschaltungsaufbau für ein Automatikgetriebe nach Anspruch 1, wobei der Auswahlschalter (280) an dem Schalthebel (210) bereitgestellt ist, um ein Signal zum Umstellen eines Getriebes von einem Dauerfahrmodus in einen Handschaltmodus oder umgekehrt an die Getriebesteuereinheit (100) zu senden, wenn ein Fahrer den Auswahlschalter (280) betätigt, und wobei das Schaltteil (270) die Signale an die Getriebesteuereinheit (100) in einem Status überträgt, wenn das Getriebe von dem Dauerfahrmodus in den Handschaltmodus umgestellt wird.

4. Lenkradschaltungsaufbau nach Anspruch 1 oder 2, wobei das Modusschaltteil (170) den Auswahlschalter (172) zum Erkennen der Drehung des Schalthebels (110) aus der Dauerfahrmodusstellung in die Handschaltmodusstellung und einen unteren und einen oberen Schalter (174, 176) zum Erkennen eines Schwenkvorgangs des Schalthebels (110) nach oben und nach unten als entsprechendes Hoch- und Rückschaltsignal aufweist.

5. Lenkradschaltungsaufbau nach Anspruch 4, wobei der Auswahlschalter (172) sein erkanntes Signal an die Getriebesteuereinheit (100) überträgt, um das Getriebe von dem Dauerfahrmodus in den Handschaltmodus umzustellen, wenn es die Drehung des Schalthebels (110) von der Dauerfahrmodusstellung in die Handschaltmodusstellung erkennt.

6. Lenkradschaltungsaufbau nach einem der vorhergehenden Ansprüche, wobei die Rastbacken (132a) derart gestaltet sind, dass der Schalthebel (110) nur in eine nach oben schwenkbare Lage gedreht werden kann, wenn der Schalthebel (110) aus der Dauerfahrmodusstellung in die Handschaltstellung gedreht wird, so dass eine direkte Umstellung vom Dauerfahrmodus in den Handschaltmodus verhindert wird.

7. Lenkradschaltungsaufbau nach einem der Ansprüche 1 bis 3, wobei der Auswahlschalter (280) ein Signal zum Umstellen des Getriebes vom Dauerfahrmodus in den Handschaltmodus an die Getriebesteuereinheit (100) überträgt, wenn er "EIN" geschaltet ist, und ein Signal zum umgekehrten Umstellen des Getriebes an die Getriebesteuereinheit (100) überträgt, wenn er "AUS"geschaltet ist.

8. Lenkradschaltungsaufbau nach einem der Ansprüche 1 bis 3, wobei der Auswahlschalter (280) an einem Bedienungsknopf (214) des Schalthebels (210) bereitgestellt ist und derart gestaltet ist, dass eine Schaltleitung (282) durch einen inneren hohlen Abschnitt des Schalthebels (210) hindurch gezogen ist.

9. Lenkradschaltungsaufbau nach einem der Ansprüche 1 bis 3, wobei das Schaltteil (270) einen oberen und einen unteren Schalter (274, 276) zum Erkennen der Schwenkbetätigungen des Schalthebels (210) nach oben und nach unten als die entsprechenden Hoch- und Rückschaltsignale aufweist.

10. Lenkradschaltungsaufbau nach einem der Ansprüche 1 bis 3, wobei der Schalthebelaufbau ferner einen Cluster (290) zum Anzeigen des gegenwärtigen Schaltbereichs aufweist und der Cluster (290) mit Anzeigeleuchten zum Anzeigen des Dauerfahrmodus und des Handschaltmodus bereitgestellt ist, um den gegenwärtigen Modus entsprechend anzuzeigen, wenn der Modus mittels des Auswahlschalters umgestellt wird.

11. Lenkradschaltungsaufbau nach einem der vorhergehenden Ansprüche, wobei die Rastbacken (132a) auf einer separat an der unteren Platte angebrachten Führungsplatte (132; 232) ausgebildet sind.

## Revendications

1. Structure de levier de changement de vitesse de type colonne pour une transmission automatique comportant un mode de changement de vitesse manuel comprenant :
une plaque supérieure (20 ; 120 ; 220) entraînée en rotation autour d'un arbre de direction par un levier de changement de vitesse (10 ; 110 ; 210) ;
une plaque inférieure (30 ; 130 ; 230) prévue dans une partie inférieure de la plaque supérieure (20 ; 120 ; 220) et comportant des dents de blocage (132a) qui effectuent des actions de préhension et de libération à chaque position de rapport de vitesse d'une butée (12) formée sur le levier de changement de vitesse (10 ; 110 ; 210) lorsque le levier de changement de vitesse (10 ; 110 ; 210) est pivoté vers le haut et vers le bas ; et
un levier d'actionnement de câble (40 ; 140 ; 240) prévu sur la plaque inférieure (30 ; 130 ; 230) et pivoté par un joint à rotule (22) formé sur la plaque supérieure (20 ; 120 ; 220) pour actionner un câble de commande de transmission (60 ; 160 ; 260)
**caractérisée en ce que**
le levier de changement de vitesse (110 ; 210) peut être tourné dans un mode de changement de vitesse manuel prédéterminé établit par la plaque inférieure (130 ; 230), un commutateur de sélection (172 ; 280) est prévu pour transmettre un signal entraînant le passage d'une transmission d'un mode d'entraînement dans un mode de changement de vitesse manuel ou vice versa à une unité de commande de transmission (100), et une partie de commutateur de mode (170) ou une partie de commutateur (270) est prévue dans la position de mode de changement de vitesse manuel du levier de changement de vitesse (110 ; 210) pour détecter les opérations de pivotement vers le haut et vers le bas du levier de changement de vitesse (110 ; 210) en tant que signaux de passage à une vitesse supérieure et de passage à une vitesse inférieure, respectivement, et pour transmettre les signaux à l'unité de commande de transmission (100).

2. Structure de levier de changement de vitesse de type colonne pour une transmission automatique selon la revendication 1, **caractérisée en ce que** les dents de blocage (132a) sont réalisées de sorte que le levier de changement de vitesse (110 ; 210) soit tourné d'une position de mode d'entraînement vers une position de mode de changement de vitesse manuel.

3. Structure de levier de changement de vitesse de type colonne pour une transmission automatique selon la revendication 1, **caractérisée en ce que** le commutateur de sélection (280) est prévu sur le levier de changement de vitesse (210) pour transmettre un signal pour faire passer une transmission d'un mode d'entraînement dans un mode de changement de vitesse manuel ou vice versa à l'unité de commande de transmission (100) lorsqu'un conducteur actionne le commutateur de sélection (280), et **caractérisée en ce que** la partie de commutateur (270) transmet les signaux à l'unité de commande de transmission (100) dans un état dans lequel la transmission est passée du mode d'entraînement dans le mode de changement de vitesse manuel.

4. Structure de levier de changement de vitesse de type colonne selon la revendication 1 ou 2, **caractérisée en ce que** la partie de commutateur de mode (170) comprend le commutateur de sélection (172) pour détecter la rotation du levier de changement de vitesse (110) de la position de mode d'entraînement vers la position de mode de changement de vitesse manuel, et les commutateurs supérieur et inférieur (174, 176) pour détecter les opérations de pivotement vers le haut et vers le bas du levier de changement de vitesse (110) en tant que signaux de passage à une vitesse supérieure et de passage à une vitesse inférieure, respectivement.

5. Structure de levier de changement de vitesse de type colonne selon la revendication 4, **caractérisée en ce que** le commutateur de sélection (172) transmet son signal de détection à l'unité de commande de transmission (100) pour faire passer la transmission du mode d'entraînement dans le mode de changement de vitesse manuel lorsqu'il détecte la rotation du levier de changement de vitesse (110) de la position de mode d'entraînement vers la position de mode de changement de vitesse manuel.

6. Structure de levier de changement de vitesse de type colonne selon l'une quelconque des revendications précédentes, **caractérisée en ce que** les dents de blocage (132a) sont réalisées de manière à ce que le levier de changement de vitesse (110) ne puisse être tourné que dans un état où il est pivoté vers le haut lorsque le levier de changement de vitesse (110) est tourné de la position de mode d'entraînement vers la position de mode de changement de vitesse manuel, empêchant ainsi un passage direct du mode d'entraînement dans le mode de changement de vitesse manuel.

7. Structure de levier de changement de vitesse de type colonne selon l'une quelconque des revendications 1 à 3, **caractérisée en ce que** le commutateur de sélection (280) transmet un signal pour faire passer la transmission du mode d'entraînement dans le mode de changement de vitesse manuel à l'unité de commande de transmission (100) lorsqu'il est "actif" et transmet un signal pour effectuer le passage inverse dans la transmission à l'unité de commande de transmission (100) lorsqu'il est "inactif".

8. Structure de levier de changement de vitesse de type colonne selon l'une quelconque des revendications 1 à 3, **caractérisée en ce que** le commutateur de sélection (280) est prévu sur un bouton (214) du levier de changement de vitesse (210) et est réalisé de sorte qu'un câble de commutateur (282) soit tiré à travers une partie creuse interne du levier de changement de vitesse (210).

9. Structure de levier de changement de vitesse de type colonne selon l'une quelconque des revendications 1 à 3, **caractérisée en ce que** la partie de commutateur (270) comprend des commutateurs supérieur et inférieur (274, 276) pour détecter les opérations de pivotement vers le haut et vers le bas du levier de changement de vitesse (210) en tant que signaux de passage à une vitesse supérieure et de passage à une vitesse inférieure, respectivement.

10. Structure de levier de changement de vitesse de type colonne selon l'une quelconque des revendications 1 à 3, **caractérisée en ce que** la structure de levier de changement de vitesse comprend en outre un groupe (290) pour indiquer la plage de changement de vitesse actuel et le groupe (290) est pourvu de voyants pour indiquer le mode d'entraînement et le mode de changement de vitesse manuel, respectivement, pour montrer le mode actuel lorsque le mode est modifié par le commutateur de sélection.

11. Structure de levier de changement de vitesse de type colonne selon l'une quelconque des revendications précédentes, **caractérisée en ce que** les dents de blocage (132a) sont formées sur une plaque de guidage (132 ; 232) fixée séparément à la plaque inférieure.
